# EUROPEAN PATENT SPECIFICATION

(11) **EP 2 175 180 B1**
(45) Date of publication and mention of the grant of the patent: **31.08.2011**
(21) Application number: 09012597.2
(22) Date of filing: 06.10.2009
(51) Int. Cl.: F16K 1/22, F16K 47/08

(54) **Butterfly valve flow control device**
Drosselventilströmungswächter
Dispositif de contrôle de débit de vanne papillon

(30) Priority: 10.10.2008 US 104312 P
(43) Date of publication of application: 14.04.2010
(73) Proprietor: Yeary & Associates, Inc., Chicago IL 60610 (US)
(72) Inventor: Yeary, Arthur R., Chicago, IL 60611 (US); Baumann, Hans, Rye, NH 03870 (US)
(74) Representative: Gesthuysen, von Rohr & Eggert

(56) References cited:
- JP-A- 11 230 371
- JP-A- 2003 097 732
- JP-A- 2004 190 851
- JP-U- 7 023 867
- JP-U- 63 022 468
- US-A- 5 722 357

## Description

The present invention generally relates to a device to control the flow of a fluid through a butterfly valve. More specifically, the present invention relates to a control valve assembly with the features of the introductory part of claim 1. It also relates to a flow control device for use with a butterfly valve with the features of the introductory part of claim 6.

Butterfly valves are in common usage for controlling the flow of various fluids, i.e. liquid or gas streams. Butterfly valves are used to throttle fluid flow and for on/off applications. A typical control valve assembly includes a body having a passage extending through it and a butterfly valve vane pivotally mounted within the body. The butterfly vane is characteristically in the form of a disk.

When fluid passes through a partially open butterfly valve, the fluid undergoes a significant pressure drop. One of the basic problems for butterfly valves is that the pressure drop tends to cause cavitation and consequent cavitation-induced damage in liquid service and noise in gas service.

In an attempt to solve these problems, it is proposed to use a diffuser with the butterfly valve. A diffuser is a perforated member that increases the restriction near the valve opening and breaks the fluid stream into multiple jets. This has a positive effect on the cavitation and noise problems. As shown in US-A-3,960,177, diffusers can be integrally incorporated into the valve element. Although this configuration functions well, it is not possible to utilize the diffuser in any other valve since the diffuser is directly incorporated into the valve vane. In addition, this type of diffuser has little or no effect on the ability of the valve element to provide improved flow control near the fully opened valve position.

US-A-7,264,221 illustrates a control valve assembly that includes a pair of cages attached to opposite sides of the butterfly valve body. Although the assembly shown in this patent provides advantages over a butterfly valve without the cages, a significant drawback with this type of valve assembly is that the combined valve housing with the cages cannot be inserted or slid between pipe sections, which makes the installation of the device in the field difficult. Further, the cage walls shown in this patent protrude into and block the flow of the fluid stream when the valve is in the wide open position. The use of this type of cage assembly reduces the maximum flow capacity of the valve by a significant amount.

Now, US-A-5,722,357, which forms the starting point of the invention, illustrates a control valve assembly where the flow control device is a separate plate-like item that is sized to fit exactly between the valve body / valve disk-assembly and a flange of the outflow pipe. This flow control device can be fitted to the control valve assembly in different versions. The flow control device has an inner wall that defines an open flow passage between its upstream face surface and its downstream face surface. A plurality of teeth extends into the open passage from the inner wall, each of the plurality of teeth being separated from each other by a flow control channel. The teeth are positioned on the inner wall in a way that the outer sealing edge of the valve disk moves past the teeth to expose the flow control channels positioned therebetween as the valve disk moves between the open and closed position. The teeth taper as they extend from the inner wall in order to prevent any interference with the valve disk as it moves past the teeth.

Another prior art source (JP-U-63-022468) discloses a complete control valve block including the valve disk and the flow control device with a plurality of teeth on an upper rim as well as on a lower rim of the inner wall. This otherwise similar construction allows for a movement of the valve disk not only in the clockwise but also in the counterclockwise direction.

JP-A-11-230371 discloses control plates for a butterfly valve. Each control plate is a completely separate, flat item with a semi-circular opening and a plurality of oblong holes provided next to the opening. Here the fluid flow is restricted by the flow control device. A very similar construction with the same substantial disadvantage of a restricted flow cross section is disclosed in JP-A-2003-097732.

The object of the present invention as starting from above referenced document US-A-5,722,357 is to provide a butterfly control valve assembly and a flow control device for use with a butterfly valve that has very good flow characteristics as the valve begins to open yet allows for increased flow capacity in the open position of the valve.

Above mentioned object of the invention is meth with a control valve assembly according to claim 1.

In the control valve assembly according to the invention the flow control device includes a cylindrical inner wall that defines the cylindrical open flow passageway. The lower half of the inner wall includes a curved regress that extends into the open passage from a lower portion of the inner wall. The curved regress includes a series of flow control channels between a series of teeth. The teeth that define the curved regress each include a sloping inner surface that closely corresponds to the movement path of the sealing edge of the butterfly valve vane as the butterfly valve vane moves from a sealed position to an open position.

As the valve opens, the outer sealing edge of the vane moves along the curved face surface of each of the teeth to gradually expose the flow control channels formed in the control device. Additionally, as the valve vane rotates, the outer sealing edge gradually moves away from the curved inner surface of each of the teeth to allow further flow through the control device. This positive flow characteristics is provided by the curved regress being formed such that the outer sealing edge of the valve disk separates from the regress surface as the valve disk moves towards the open position.

The configuration of each of the teeth and flow control channels formed in the control device can be selected to maximize the effect of the control device on the fluid flow through the valve assembly.

When the valve body and flow control device are combined to create the control valve assembly, the upstream end and the downstream end of the combined assembly provides a generally planar surface such that the combined assembly can be inserted between a pair of flow pipes. Specifically, the upstream and downstream face surfaces are generally planar to facilitate easy installation of the valve assembly between the inflow and outflow pipes.

The present invention also relates to a control device for use with a complete butterfly valve defined by the features of claim 6.

Preferred embodiments of that control device are the subject matter of the dependent claims 7 to 10.

Now, further features, modifications and advantages of the invention can be obtained from the embodiments explained hereafter with reference to the drawings. The drawings illustrate the best mode presently contemplated of carrying out the invention. In the drawings:
- Fig 1: is an exploded view of a control valve assembly including a flow control device in accordance with the present disclosure;
- Fig. 2: is an exploded section view taken along line 2-2 of Fig. 1;
- Fig. 3: is a section view of the assembled combination of the butterfly valve and the flow control device of the present disclosure;
- Fig. 4: is an end view of the flow control device and butterfly valve taken along line 4-4 of Fig. 3;
- Fig. 5: is a section view of the butterfly valve and a second embodiment of the flow control device of the present disclosure;
- Fig. 6: is an end view taken along line 6-6 of Fig. 5;
- Fig. 7: is a graph showing the control characteristics of a butterfly valve with the flow control device plotting the flow coefficient CV against the angle of valve opening;
- Fig. 8: is a graph illustrating the coefficient of incipient cavitation Xfz for the butterfly valve including the flow control device versus a conventional butterfly valve;
- Fig. 9: is a graph showing the dynamic torque for a butterfly valve alone and with the flow control device;
- Fig. 10: is an exploded section view of an alternate embodiment of a flow control device that can be utilized with a butterfly valve; and
- Fig. 11: is a section view of the butterfly valve and flow control device in an assembled condition.

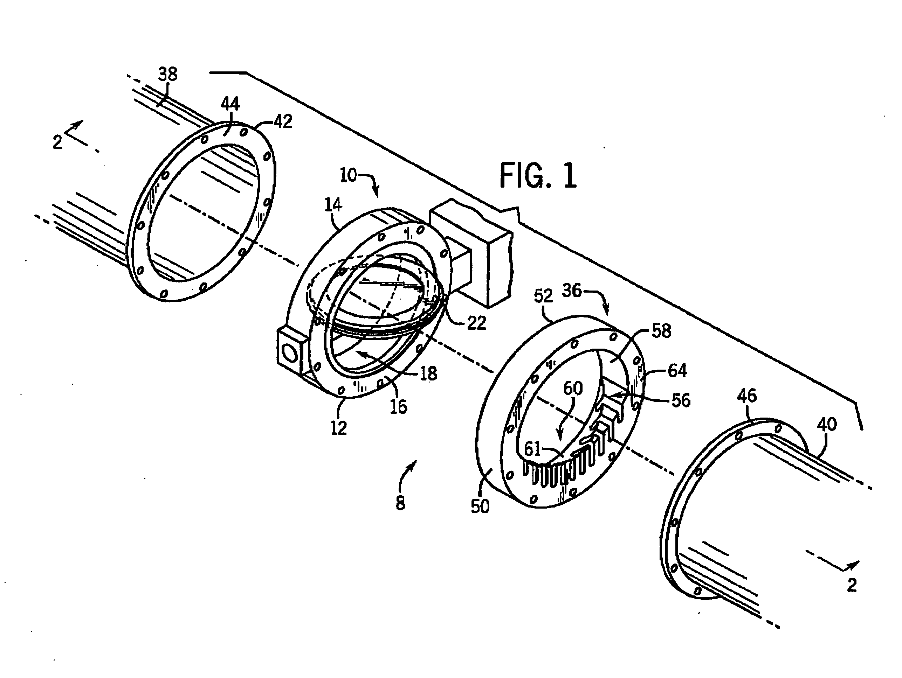

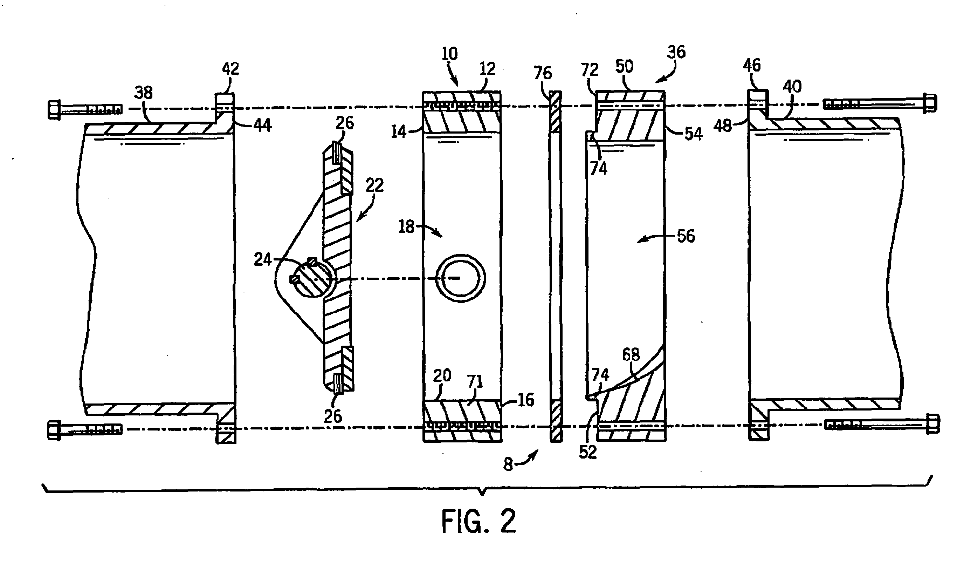

Fig. 1 illustrates a control valve assembly 8 that includes a control system that modifies the control characteristics of a conventional butterfly valve 10 such that the butterfly valve 10, with the control system installed, more closely approximates the flow characteristics of a globe valve. As shown in Figs. 1 and 2, the butterfly valve 10 includes a valve body 12 that extends from a planar upstream face surface 14 to a downstream face surface 16 and is preferably formed from a metallic material, such as stainless steel. The valve body 12 defines an open passage 18 that allows fluid to flow through the valve body 12 from the upstream face surface 14 to the downstream face surface 16. The open passage 18 is defined by a generally cylindrical inner wall 20.

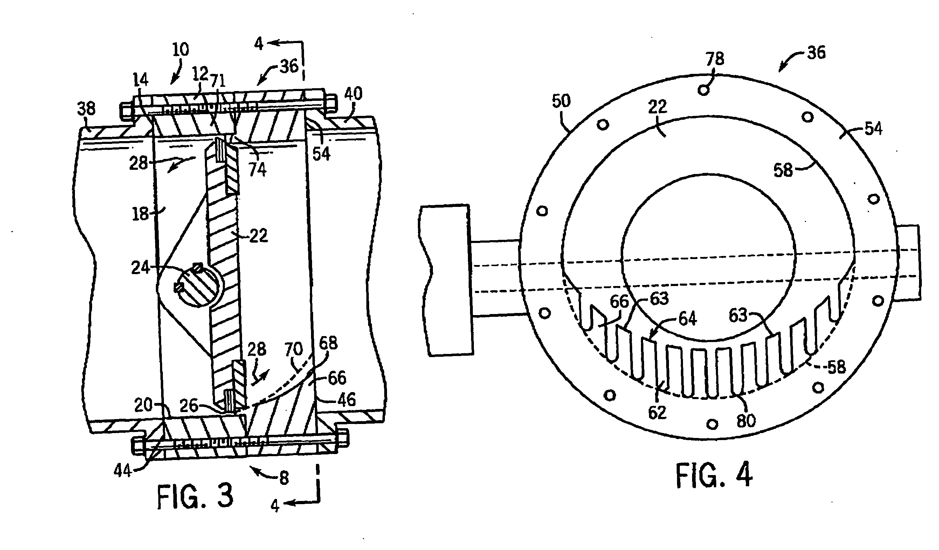

The butterfly valve 10 includes a valve disk 22 that is rotatably positioned within the open passage 18 by a pivot shaft 24. The pivot shaft 24 defines a shaft axis about which the valve disk 22 is rotatable between the closed, sealing position of Fig. 3 and the open position shown in Fig. 1. Preferably, the butterfly valve 10 could be either a triple offset butterfly valve or a standard butterfly valve while operating within the scope of the present disclosure.

Referring back to Fig. 2, the valve disk 22 includes an outer sealing edge 26 that provides a seal with the inner wall 20 when the butterfly valve 10 is in its closed, sealing position.

When the butterfly valve 10 is initially opened, the valve disk 22 rotates such that its first outer sealing edge 26 moves along a movement arc in the direction shown by arrows 28 in Fig. 3. As the valve disk 22 rotates away from the sealing position, liquid begins to flow around the outer circumference of the valve disk 22 between the valve disk 22 and the inner cylindrical wall 20.

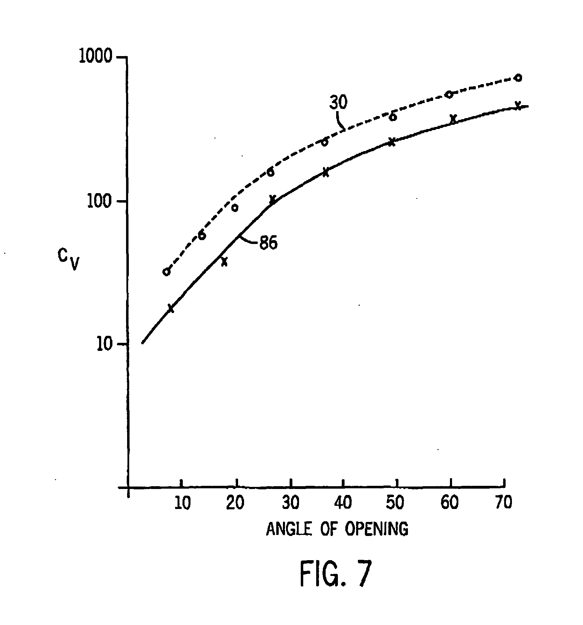

In Fig. 7, the dashed line 30 illustrates the flow coefficient Cv (gallons of water per minute at 1 psi pressure drop) for the butterfly valve 10 without any type of flow control device. The broken line 30 illustrates a rather rapid increase in flow relative to the angle of opening of the butterfly valve.

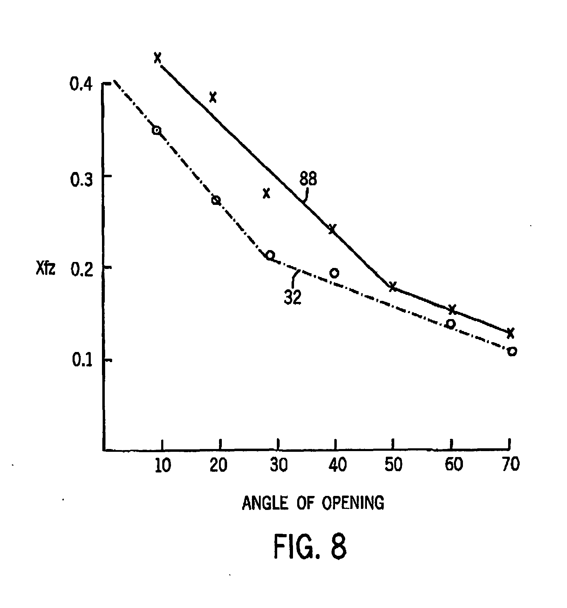

Fig. 8 illustrates the coefficient of incipient cavitation Xfz for a conventional butterfly valve 10 shown by dotted line 32, against the angle of opening for the butterfly valve 10.

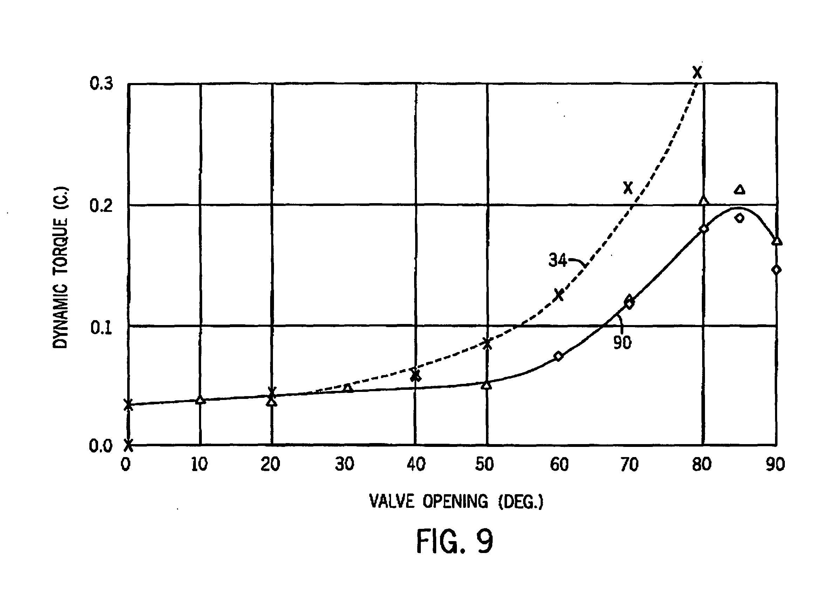

Fig. 9, in turn, illustrates the dynamic torque for the actuating device to overcome in order to open or close the valve against the flow of fluid. The dashed line 34 illustrates this dynamic torque as the butterfly valve 10 continues to open between a fully closed position and a fully open position.

Referring back to Figs. 1 and 2, the control valve assembly 8 of the present disclosure includes a flow control device 36 that can be utilized with the butterfly valve 10. The combination of the butterfly valve 10 and the flow control device 36 can be positioned between an inflow pipe 38 and an outflow pipe 40. The inflow pipe 38 includes an attachment flange 42 defining a generally planar attachment surface 44. The outflow pipe 40 also includes an attachment flange 46 that defines a generally planar attachment surface 48. As can be seen in Fig. 2, the upstream face surface 14 of the valve body 12 contacts the attachment surface 44 while the planar downstream face surface 54 of the flow control device 36 contacts the attachment surface 48.

Referring back to Fig. 1, the flow control device 36 is a generally cylindrical member formed from a metallic material, such as stainless steel. The flow control device 36 includes a generally cylindrical outer wall 50 extending between an upstream face surface 52 and a downstream face surface 54. The control device 36 defines an open passage 56 that extends from the upstream face surface 52 to the downstream face surface 54.

As shown in Fig. 1, the flow control device 36 includes a cylindrical inner wall 58 that extends uninterrupted over approximately the upper half of the generally cylindrical open passage 56. The lower half of the inner wall 58 includes a curved regress 60 having a regress surface 61 that extends into the open passage 56 from the lower portion of the inner wall 58. As shown in Fig. 4, the lower half of the inner wall 58 includes a series of flow control channels 62 that extend radially toward the inner wall 58 (shown by a dashed line) from the curved inner surface 64. Each of the flow control channels 62 generally separates a pair of teeth 66 that each terminate at an inner end 63 that combine to define a curved inner surface 64.

Referring now to Fig. 3, each of the teeth 66 includes a generally curved face surface 68 that forms part of the regress surface 61 (Fig. 1). The curved face surface 68 of each of the teeth 66 is configured such that when the valve disk 22 rotates in the direction shown by arrow 28, the lower outer sealing edge 26 will swing through the movement arc described by the dashed line 70. As can be illustrated in Fig. 3, in one preferred embodiment the dashed line 70 indicating the path of the outer sealing edge 26 gradually separates from the regress surface formed by the curved face surface 68 of the individual teeth 66. The degree of separation between the outer sealing edge 26 and the face surface 68 of the teeth 66 can be designed to determine the desired rate of fluid flow increase per given travel position of the valve disk 22. Thus, as the valve disk 22 rotates, the outer sealing edge 26 exposes an increasing volume of each of the flow control channels 62 to increase the amount of flow through the control device 36. Additionally, the increase in the separation between the outer sealing edge 26 and the face surface 68 of each of the teeth 66 allows for an increasing amount of fluid to flow between the valve disk and each of the teeth 66.

Referring again to Fig. 3, the butterfly valve 10 and the flow control device 36 can be assembled as a combined unit and inserted between the inflow pipe 38 and the outflow pipe 40. Specifically, an outer wall 71 of the butterfly valve 10 is received within a recess 72 formed in the flow control device 36 such that an attachment lip 74 of the control device extends into the open passage 18 of the butterfly valve 10. A gasket 76 can be positioned between the downstream face surface 16 of the butterfly valve 10 and the upstream face surface 52 of the control device 36.

Although the butterfly valve 10 and the flow control device 36 are shown as separate units that can be combined and inserted between the inflow pipe 38 and the outflow pipe 40, it is contemplated that the flow control device 36 and the butterfly valve 10 could be integrated into a single cast component.

As illustrated in Fig. 4, the downstream face surface 54 of the control device 36 includes a series of openings 78 that each receive a connector for attaching the control device 36 to the butterfly valve body 12.

As illustrated in Fig. 3, when the flow control device 36 is attached to the valve body 12, the combined assembly is defined by the generally planar upstream face surface 14 of the valve body 12 and the generally planar downstream face surface 54 of a control device 36. Thus, the combined control valve assembly 8, including the valve body 12 and the control device 36, can be slid between the attachment surface 44 of the inflow pipe 38 and the attachment surface 46 of the outflow pipe 40.

Referring back to Fig. 4, the individual flow control channels 62 formed between the teeth 66 allow fluid to flow through the control device as the valve disk 22 opens along the dashed line 70 shown in Fig. 3. The size and shape of the flow control channels 62 determines the rate of fluid flow and affects the level of fluid velocity induced turbulence. One of the best ways to filter sound from the inside of the downstream pipe to the observed pipe exterior is by using the pipe wall as a barrier. The resultant sound absorption of the pipe wall is called the transmission loss TI. The transmission loss TL is most effective if it can be arranged such that the frequency at which the sound is produced occurs above the pipe's ring frequency Fr. The pipe's ring frequency Fr is equal to 5,000/3.14 D in Hz, where D is the interior pipe diameter in meters. The peak frequency Fp is determined by 0.2 Uvc/w, where Uvc is the jet velocity (assumed to be 333 m/second) and w is the width of the flow control channel 62 in meters. The additional transmission loss Δ TIfp due to higher frequencies is given by the equation: A TIfp = 7.8 + 20 log (Fₚ/Fᵣ) in decibels (dB).

Based upon the above equations, it can be shown that for a flow control channel 62 with a width of 0.04 D, a sound reduction of 8 dB can be expected. This then makes the preferred width w of the flow control channels 62 less than 4% of the pipe diameter.

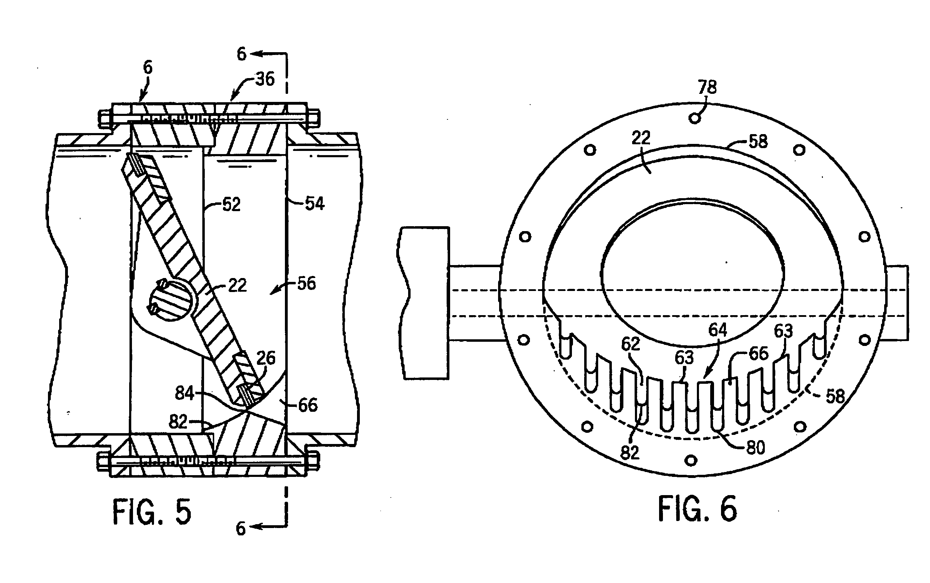

The flow control channels 62 may further be configured to meet certain manufacturing requirements. As an example, the bottom 80 of the flow control channels 62 may be rounded, as shown in Fig. 6, or squared, as shown in Fig. 4.

Referring back to Fig. 6, it also may be desirable to delay the onset of the exposure of the flow control channels 62 to fluid flow to a somewhat larger valve travel in order to achieve a more gradual opening characteristic. In the embodiment shown in Fig. 6, the flow control channels 62 between each of the teeth 66 includes a flow restricting wall 82 that extends upward into the flow control channels from the bottom edge 80. As can be seen in Fig. 5, as the valve disk 22 rotates, the outer sealing edge 26 stays in close contact with the flow restricting wall 82 until the valve disk 22 rotates a larger degree of travel. The flow restricting wall 82 extends into the open passage 56 from the upstream face surface 52 to a peak 84. The flow restricting wall 82 then extends away from the open passage 56 to the downstream face surface 54.

Once the outer sealing edge 26 passes over the peak 84, the individual flow control channels 62 between each of the fingers 66 are exposed to the flow of fluid. Thus, the curved flow restricting wall 82 that extends to the peak 84 further restricts the flow of fluid through the flow control device 36.

In the embodiment shown in Fig. 5, the butterfly valve 10 is a triple eccentric butterfly valve. However, the butterfly valve could be a symmetrical butterfly valve, or a double eccentric butterfly valve while operating within the scope of the present disclosure. In either embodiment, the control device 36 enhances the operation of the butterfly valve, as will be described in detail below.

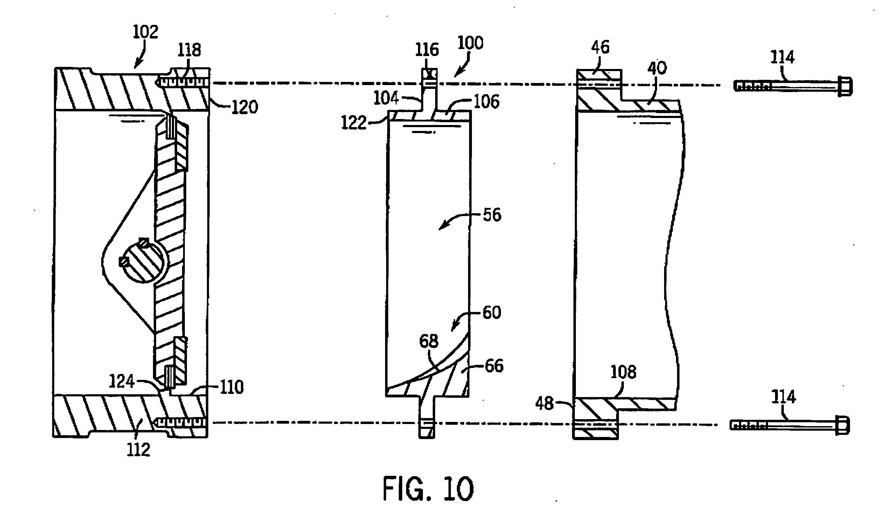

Fig. 10 illustrates an alternate embodiment of a flow control device 100 that can be used to retrofit a butterfly valve 102 mounted in place between an inflow pipe (not shown) and an outflow pipe 40. When the butterfly valve 102 is mounted in place between the inflow and outflow pipes, minimal room exists to insert a flow control device 36, such as is shown in Fig. 1. In such a situation, the flow control device 100 shown in Fig. 10 can be utilized.

The flow control device 100 includes an attachment flange 104 that extends radially outward from an outer wall 106. The outer wall 106 defines the open passage 56.

The flow control device 100 includes the same teeth 66 in the curved regress 60 as in the embodiment shown in Figs. 2 and 3. However, the outer wall 106 is sized such that the outer wall 106 fits within the cylindrical inner surface 108 of the outflow pipe 40 and the cylindrical inner surface 110 of the outer wall 112 of the butterfly valve 102. Thus, when the flow control device 100 is positioned between the butterfly valve 102 and the outflow pipe 40, the only additional space requirement is the thickness of the attachment flange 104.

In the embodiment shown in Fig. 10, a pair of connectors 114 pass through the attachment flange 46 of the outflow pipe 40 and through a series of openings 116 formed in the attachment flange 104. The threaded ends of each of the connectors 114 are received within internally threaded attachment bores 118 formed in the outer wall 112 of the butterfly valve 102. In the embodiment illustrated in Fig. 10, the attachment flange 104 has a thickness of between 1/4 inch and 3/8 inch such that the connectors 114 previously used to secure the outflow pipe 40 to the butterfly valve 102 can be utilized when the flow control device 100 is inserted there between.

Although not shown in Fig. 10, a pair of resilient gaskets can be positioned on opposite sides of the attachment flange 104 of the flow control device 100 between the attachment flange 104 and the downstream face surface 120 of the butterfly valve 102 and the attachment surface 48 of the outflow pipe 40. The pair of gaskets provides additional sealing between the flow control device 100 and both the butterfly valve 102 and the outflow pipe 40. It is contemplated that the gaskets could be eliminated while operating within the scope of the present disclosure.

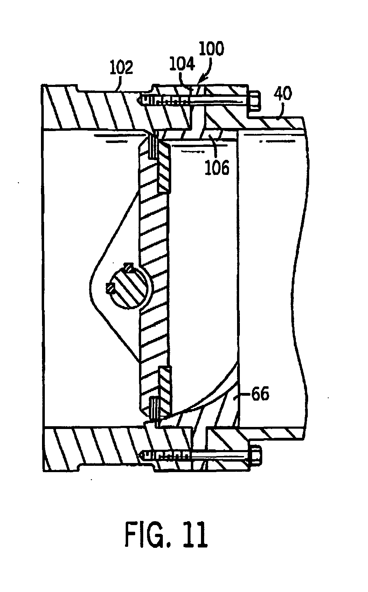

Referring now to Fig. 11, when the flow control device 100 is installed between the outflow pipe 40 and the butterfly valve 102, the outer wall 106 extends into both the outflow pipe 40 and the butterfly valve 102. The butterfly valve 102 and the outflow pipe 40 are separated by the thickness of the attachment flange 104. Once the flow control device 100 is installed as shown in Fig. 11, the series of teeth 66 provide the flow characteristics as previously described. The embodiment shown in Figs. 10 and 11 allows the flow control device 100 to be retrofit into existing applications that already include an installed butterfly valve 102.

Referring now to Fig. 7, there shown is a graph illustrating the advantage of the flow control insert on the flow coefficient relative to the angle of valve opening. In the graph shown in Fig. 7, the shape of the solid line 86 represents the flow coefficient Cv against the angle of valve opening. The shape of the solid line 86 indicates a gradual increase in flow as the angle of valve opening increases. This gradual increase in flow is preferred for control purposes. Dashed line 30, which indicates the flow characteristics for a butterfly valve without the flow control device, indicates a substantially faster rate of flow increase for lower angles of opening of the butterfly valve. Thus, the flow control device 36 shown in the drawing Figures has the advantage of providing a gradual increase in flow relative to a butterfly valve without the flow control device, which is much preferred for pressure or flow control purposes.

Another drawback of conventional butterfly valves is their high tendency to cavitate at relatively low-pressure drops. Cavitations cause damage and noise in a piping system including a butterfly valve. In the graph of Fig. 8, the flow control device provides a higher coefficient of incipient cavitation, Xfz, which is shown by the solid line 88 in Fig. 8. The coefficient of incipient cavitation, Xfz, is an industrial standardized term that is defined as the pressure ratio at which there is an audible indication of beginning cavitation (vaporizing of water). In a conventional butterfly valve without the flow control device, the coefficient of incipient cavitation is reduced, as indicated by dashed line 32 allowing for a more then 50% increase in pressure drop without incurring cavitation.

Fig. 9 illustrates yet another advantage of the flow control device utilized with the butterfly valve in accordance with the present disclosure. As shown by solid line 90, the dynamic torque that the actuating device must overcome to open the butterfly valve is decreased as compared to the butterfly valve without the flow control device, which is shown by dashed line 34. Thus, the use of the flow control device reduces the dynamic torque as compared to a butterfly valve not including the flow control device. The reduction in dynamic torque offers substantial economic advantages by allowing the use of much smaller actuating devices.

The drawings and the above description depict the currently preferred embodiment of the present disclosure. However, without departing from the scope of the disclosure, numerous modifications can be made without departing from the intent of the invention. As an example, the control element could be an integral part of means to retain a sealing element within the valve housing. Furthermore, the control element could be fastened by welding to the valve housing or could be an integral cast portion of the valve housing.

## Claims

1. A control valve assembly for mounting between an inflow pipe (38) and an outflow pipe (40) carrying a fluid, comprising
a valve body (12) having an open passage (18) extending from a planar upstream face surface (14) to a downstream face surface (16),
a valve disk (22) positioned in the open passage (18) and rotatable between an open position and a closed position to selectively permit the flow of fluid through the valve body (12), said valve disk (22) comprising an outer sealing edge (26), and
a flow control device (36),
wherein the flow control device (36) has an upstream face surface (52) mounted to the downstream face surface (16) of the valve body (12) and a planar downstream face surface (54),
the flow control device (36) includes an inner wall (58) that defines an open flow passage (56) between the upstream face surface (52) and the downstream face surface (54) of the flow control device (36),
in order to modify a rate of fluid flow through the control valve assembly the flow control device (36) further includes a plurality of teeth (66) each extending into the open flow passage (56) from the inner wall (58), each of the plurality of teeth (66) being separated from each other by a flow control channel (62), and
the plurality of teeth (66) are positioned on the inner wall (58), preferably only on the lower half of the inner wall (58), such that an outer sealing edge (26) of the valve disk (22) moves past the teeth (66) to expose the flow control channels (62) positioned therebetween as the valve disk (22) moves between the open and closed position,
**characterized in that**
the flow control device (36) further comprises a curved regress (68) formed in the plurality of teeth (66), wherein the curved regress (68) has a regress surface that generally corresponds to a movement arc of the outer sealing edge (26) of the valve disk (22) as the valve disk (22) moves between the open and closed positions and is formed such that the outer sealing edge (26) of the valve disk (22) separates from the regress surface (68) as the valve disk (22) moves toward the open position.

2. The control valve assembly of claim 1, **characterized in that**
when the valve disk (22) is in the closed positions, the entire control valve assembly is contained between the planar upstream face surface (14) of the valve body (12) and the planar downstream face surface (54) of the flow control device (36) such that the flow control device (36) can be slid between the inflow pipe (38) and the outflow pipe (40).

3. The control valve assembly of claim 1 or 2, **characterized in that**
each of the flow control channels (62) includes a flow restricting wall (82) that extends away from an outer wall into the flow control channel (62) from the upstream face surface (52) to a peak (84) and extends toward the outer wall from the peak (84) to the downstream face surface (54), and/or
each of the flow control channels (62) has a width that is less than 4% of a diameter of the inflow pipe (38), and/or
the flow control channels (62) are configured to provide an equal-percentage flow of the valve for at least 50% of the travel of the valve disk (22) from the closed position to the open position.

4. The control valve assembly according to any one of the preceding claims,
**characterized in that**
the flow control device (36) comprises an attachment flange (at 50) extending from the inner wall (58).

5. The control valve assembly of claim 4, **characterized in that**
it further comprises an attachment flange (at 50) extending from the inner wall (58).

6. A flow control device for use with a butterfly valve,
the butterfly valve having a valve disk (22) movable between an open position and a closed position to allow fluid to flow through the butterfly valve,
the flow control device (36) being configured to modify the flow characteristics of the butterfly valve,
wherein the flow control device (36) comprises an upstream face surface (52) and a planar downstream face surface (54) and an inner wall (58) that defines an open flow passage (56) between the upstream face surface (52) and the downstream face surface (54),
wherein the flow control device (36) further comprises a plurality of teeth (66) each extending into the open flow passage (56) from the inner wall (58), each of the plurality of teeth (66) being separated from each other by a flow control channel (62),
wherein the plurality of teeth (66) are positioned on the inner wall (58), preferably only on the lower half of the inner wall (58), such that an outer sealing edge (26) of a valve disk (22) can move past the teeth (66) to expose the flow control channels (62) positioned therebetween,
**characterized in that**
the flow control device (36) further comprises a curved regress (68) formed in the plurality of teeth (66), wherein the curved regress (68) has a regress surface (68) that generally corresponds to a movement are of an outer sealing edge (26) of the valve disk (22), but is formed such that the outer sealing edge (26) of the valve disk (22) separates from the regress surface (68) as the valve disk (22) moves toward the open position.

7. The flow control device of claim 6, **characterized in that**
each of the flow control channels (62) includes a flow restricting wall (82) that extends away from an outer wall into the flow control channel (62) from an upstream face surface (52) of the flow control device (36) to a peak (84) and extends toward the outer wall from the peak (84) to a downstream face surface (54) of the flow control device (36).

8. The flow control device of claim 6 or 7, **characterized in that**
each of the flow control channels (62) has a width that is less than 4% of a diameter of an associated inflow pipe (38) and/or
the flow control channels (62) are configured to provide an equal-percentage flow of the valve for at least 50% of the travel of the valve disk (22) from the closed position to the open position.

9. The flow control device according to any one of the claims 6 to 8,
**characterized in that**
it further comprises an attachment flange (at 50) extending from the inner wall (58).

10. The flow control device of claim 9, **characterized in that**
the attachment flange (at 50) has a width less than the length of the inner wall (58).

## Patentansprüche

1. Steuerventilanordnung zur Befestigung zwischen einem Einströmungsrohr (38) und einem Ausströmungsrohr (40), die ein Fluid befördern, umfassend:
einen Ventilkörper (12) mit einem offenen Durchgang (18), der sich von einer planaren stromaufwärtigen Stirnfläche (14) zu einer stromabwärtigen Stirnfläche (16) erstreckt,
einen Ventilteller (22), der in dem oberen Durchgang (18) angeordnet ist und zwischen einer geöffneten Stellung und einer geschlossenen Stellung drehbar ist, um den Fluidstrom durch den Ventilkörper (12) gezielt zu gestatten, wobei der Ventilteller (22) einen Außendichtungsrand (26) umfasst, und
einen Strömungswächter (36),
wobei der Strömungswächter (36) eine an der stromabwärtigen Stirnfläche (16) des Ventilkörpers (12) angebrachte stromaufwärtige Stirnfläche (52) und eine planare stromabwärtige Stirnfläche (54) aufweist,
der Strömungswächter (36) eine Innenwand (58) enthält, die einen offenen Strömungsdurchgang (56) zwischen der stromaufwärtigen Stirnfläche (52) und der stromabwärtigen Stirnfläche (54) des Strömungswächters (36) definiert,
zur Änderung einer Fluidstromrate durch die Steuerventilanordnung der Strömungswächter (36) weiterhin mehrere Zähne (66) enthält, die sich jeweils von der Innenwand (58) in den offenen Strömungsdurchgang (56) erstrecken, wobei jeder der mehreren Zähne (66) von den anderen durch einen Strömungssteuerkanal (62) getrennt ist, und
die mehreren Zähne (66) an der Innenwand (58), vorzugsweise nur an der unteren Hälfte der Innenwand (58), positioniert sind, so dass sich ein Außendichtungsrand (26) des Ventiltellers (22) an den Zähnen (66) vorbei bewegt, um die dazwischen positionierten Strömungssteuerkanäle (62) freizulegen, wenn sich der Ventilteller (22) zwischen der geöffneten und der geschlossenen Stellung bewegt,
**dadurch gekennzeichnet, dass**
der Strömungswächter (36) weiterhin eine gekrümmte Rückausbildung (68) umfasst, die in den mehreren Zähnen (66) ausgebildet ist, wobei die gekrümmte Rückausbildung (68) eine Rückausbildungsfläche aufweist, die einem Bewegungsbogen des Außendichtungsrands (26) des Ventiltellers (22) allgemein entspricht, wenn sich der Ventilteller (22) zwischen der geöffneten und der geschlossenen Stellung bewegt, und so geformt ist, dass der Außendichtungsrand (26) des Ventiltellers (22) von der Rückausbildungsfläche (68) getrennt wird, wenn sich der Ventilteller (22) in die geöffnete Stellung bewegt.

2. Steuerventilanordnung nach Anspruch 1, **dadurch gekennzeichnet, dass**,
wenn sich der Ventilteller (22) in der geschlossenen Stellung befindet, die gesamte Steuerventilanordnung zwischen der planaren stromaufwärtigen Stirnfläche (14) des Ventilkörpers (12) und der planaren stromabwärtigen Stirnfläche (54) des Strömungswächters (36) enthalten ist, so dass der Strömungswächter (36) zwischen dem Einströmungsrohr (38) und dem Ausströmungsrohr (40) eingeschoben werden kann.

3. Steuerventilanordnung nach Anspruch 1 oder 2, **dadurch gekennzeichnet, dass**
jeder der Strömungssteuerkanäle (62) eine Strömungsdrosselwand (82) enthält, die sich von einer Außenwand weg in den Strömungssteuerkanal (62), von der stromaufwärtigen Stirnfläche (52) zu einer Spitze (84) und von der Spitze (84) in Richtung der Außenwand zu der stromabwärtigen Stirnfläche (54) erstreckt, und/oder
jeder der Strömungssteuerkanäle (62) eine Breite aufweist, die kleiner als 4% eines Durchmessers des Einströmungsrohrs (38) ist, und/oder
die Strömungssteuerkanäle (62) dazu konfiguriert sind, einen Strom des Ventils gleichen Prozentanteils für mindestens 50% der Bewegung des Ventiltellers (22) aus der geschlossenen Stellung in die geöffnete Stellung bereitzustellen.

4. Steuerventilanordnung nach einem der vorhergehenden Ansprüche, **dadurch gekennzeichnet, dass**
der Strömungswächter (36) einen Befestigungsflansch (bei 50) umfasst, der sich von der Innenwand (58) erstreckt.

5. Steuerventilanordnung nach Anspruch 4, **dadurch gekennzeichnet, dass**
sie weiterhin einen Befestigungsflansch (bei 50) umfasst, der sich von der Innenwand (58) erstreckt.

6. Strömungswächter zur Verwendung mit einem Drosselventil,
wobei das Drosselventil einen Ventilteller (22) aufweist, der zwischen einer geöffneten Stellung und einer geschlossenen Stellung beweglich ist, um Fluidstrom durch das Drosselventil zu gestatten, wobei der Strömungswächter (36) dazu konfiguriert ist, die Strömungseigenschaften des Drosselventils zu ändern,
wobei der Strömungswächter (36) eine stromaufwärtige Stirnfläche (52) und eine planare stromabwärtige Stirnfläche (54) und eine Innenwand (58) aufweist, die einen offenen Strömungsdurchgang (56) zwischen der stromaufwärtigen Stirnfläche (52) und der stromabwärtigen Stirnfläche (54) definiert,
wobei der Strömungswächter (36) weiterhin mehrere Zähne (66) enthält, die sich jeweils von der Innenwand (58) in den offenen Strömungsdurchgang (56) erstrecken, wobei jeder der mehreren Zähne (66) von den anderen durch einen Strömungssteuerkanal (62) getrennt ist,
wobei die mehreren Zähne (66) an der Innenwand (58), vorzugsweise nur an der unteren Hälfte der Innenwand (58), positioniert sind, so dass sich ein Außendichtungsrand (26) eines Ventiltellers (22) an den Zähnen (66) vorbei bewegen kann, um die dazwischen positionierten Strömungssteuerkanäle (62) freizulegen,
**dadurch gekennzeichnet, dass** der Strömungswächter (36) weiterhin eine gekrümmte Rückausbildung (68) umfasst, die in den mehreren Zähnen (66) ausgebildet ist, wobei die gekrümmte Rückausbildung (68) eine Rückausbildungsfläche aufweist (68), die einem Bewegungsbogen eines Außendichtungsrands (26) des Ventiltellers (22) allgemein entspricht, aber so geformt ist, dass der Außendichtungsrand (26) des Ventiltellers (22) von der Rückausbildungsfläche (68) getrennt wird, wenn sich der Ventilteller (22) in die geöffnete Stellung bewegt.

7. Strömungswächter nach Anspruch 6, **dadurch gekennzeichnet, dass**
jeder der Strömungssteuerkanäle (62) eine Strömungsdrosselwand (82) enthält, die sich von einer Außenwand weg in den Strömungssteuerkanal (62), von einer stromaufwärtigen Stirnfläche (52) des Strömungswächters (36) zu einer Spitze (84) und von der Spitze (84) in Richtung der Außenwand zu einer stromabwärtigen Stirnfläche (54) des Strömungswächters (36) erstreckt.

8. Strömungswächter nach Anspruch 6 oder 7, **dadurch gekennzeichnet, dass**
jeder der Strömungssteuerkanäle (62) eine Breite aufweist, die kleiner als 4% eines Durchmessers eines zugehörigen Einströmungsrohrs (38) ist, und/oder
die Strömungssteuerkanäle (62) dazu konfiguriert sind, einen Strom des Ventils gleichen Prozentanteils für mindestens 50% der Bewegung des Ventiltellers (22) aus der geschlossenen Stellung in die geöffnete Stellung bereitzustellen.

9. Strömungswächter nach einem der Ansprüche 6 bis 8, **dadurch gekennzeichnet, dass**
er weiterhin einen Befestigungsflansch (bei 50) umfasst, der sich von der Innenwand (58) erstreckt.

10. Strömungswächter nach Anspruch 9, **dadurch gekennzeichnet, dass**
der Befestigungsflansch (bei 50) eine Breite aufweist, die kleiner als die Länge der Innenwand (58) ist.

## Revendications

1. Ensemble de soupape de régulation destiné à être monté entre un tuyau d'afflux (38) et un tuyau d'évacuation (40) transportant un fluide, comprenant :
un corps de soupape (12) ayant un passage ouvert (18) s'étendant depuis une surface plane côté amont (14) jusqu'à une surface côté aval (16),
un disque de soupape (22) positionné dans le passage ouvert (18) et pouvant tourner entre une position ouverte et une position fermée pour permettre, de manière sélective, l'écoulement de fluide à travers le corps de soupape (12), ledit disque de soupape (22) comprenant un bord d'étanchéité externe (26), et
un dispositif de régulation d'écoulement (36),
le dispositif de régulation d'écoulement (36) ayant une surface côté amont (52) montée sur la surface côté aval (16) du corps de soupape (12) et une surface plane côté aval (54),
le dispositif de régulation d'écoulement (36) comportant une paroi interne (58) qui définit un passage d'écoulement ouvert (56) entre la surface côté amont (52) et la surface côté aval (54) du dispositif de régulation d'écoulement (36),
afin de modifier une vitesse d'écoulement de fluide à travers l'ensemble de soupape de régulation, le dispositif de régulation d'écoulement (36) comportant en outre une pluralité de dents (66) s'étendant chacune dans le passage d'écoulement ouvert (56) depuis la paroi interne (58), chacune de la pluralité de dents (66) étant séparée des autres par un canal de régulation d'écoulement (62), et
la pluralité de dents (66) étant positionnée sur la paroi interne (58), de préférence uniquement sur la moitié inférieure de la paroi interne (58), de telle sorte qu'un bord d'étanchéité externe (26) du disque de soupape (22) se déplace au-delà des dents (66) pour exposer les canaux de régulation d'écoulement (62) positionnés entre elles à mesure que le disque de soupape (22) se déplace entre la position ouverte et la position fermée,
**caractérisé en ce que**
le dispositif de régulation d'écoulement (36) comprend en outre un retrait incurvé (68) formé dans la pluralité de dents (66), le retrait incurvé (68) ayant une surface de retrait qui correspond généralement à un arc de déplacement du bord d'étanchéité externe (26) du disque de soupape (22) à mesure que le disque de soupape (22) se déplace entre les positions ouverte et fermée et est formé de telle sorte que le bord d'étanchéité externe (26) du disque de soupape (22) se sépare de la surface en retrait (68) à mesure que le disque de soupape (22) se déplace vers la position ouverte.

2. Ensemble de soupape de régulation selon la revendication 1, **caractérisé en ce que**, lorsque le disque de soupape (22) est dans la position fermée, l'ensemble de soupape de régulation tout entier est contenu entre la surface plane côté amont (14) du corps de soupape (12) et la surface plane côté aval (54) du dispositif de régulation d'écoulement (36) de telle sorte que le dispositif de régulation d'écoulement (36) puisse être coulissé entre le tuyau d'afflux (38) et le tuyau d'évacuation (40).

3. Ensemble de soupape de régulation selon la revendication 1 ou 2, **caractérisé en ce que** chacun des canaux de régulation d'écoulement (62) comporte une paroi de limitation de l'écoulement (82) qui s'étend à l'écart d'une paroi externe dans le canal de régulation d'écoulement (62) depuis la surface côté amont (52) jusqu'à un pic (84) et s'étend vers la paroi externe depuis le pic (84) jusqu'à la surface côté aval (54), et/ou chacun des canaux de régulation d'écoulement (62) a une largeur inférieure à 4% d'un diamètre du tuyau d'afflux (38), et/ou
les canaux de régulation d'écoulement (62) sont configurés pour fournir un écoulement de même pourcentage de la soupape sur au moins 50% de la course du disque de soupape (22) depuis la position fermée jusqu'à la position ouverte.

4. Ensemble de soupape de régulation selon l'une quelconque des revendications précédentes,
**caractérisé en ce que**
le dispositif de régulation d'écoulement (36) comprend une bride de fixation (en 50) s'étendant depuis la paroi interne (58).

5. Ensemble de soupape de régulation selon la revendication 4, **caractérisé en ce qu'**il comprend en outre une bride de fixation (en 50) s'étendant depuis la paroi interne (58).

6. Dispositif de régulation d'écoulement pour l'utilisation avec une soupape papillon, la soupape papillon ayant un disque de soupape (22) déplaçable entre une position ouverte et une position fermée pour permettre au fluide de s'écouler à travers la soupape papillon, le dispositif de régulation d'écoulement (36) étant configuré pour modifier les caractéristiques d'écoulement de la soupape papillon,
le dispositif de régulation d'écoulement (36) comprenant une surface côté amont (52) et une surface plane côté aval (54) et une paroi interne (58) qui définit une passage d'écoulement ouvert (56) entre la surface côté amont (52) et la surface côté aval (54),
le dispositif de régulation d'écoulement (36) comprenant en outre une pluralité de dents (66) s'étendant chacune dans le passage d'écoulement ouvert (56) depuis la paroi interne (58), chacune de la pluralité de dents (66) étant séparée des autres par un canal de régulation d'écoulement (62),
la pluralité de dents (66) étant positionnée sur la paroi interne (58), de préférence uniquement sur la moitié inférieure de la paroi interne (58), de telle sorte qu'un bord d'étanchéité externe (26) d'un disque de soupape (22) puisse se déplacer au-delà des dents (66) pour exposer les canaux de régulation d'écoulement (62) positionnés entre elles,
**caractérisé en ce que**
le dispositif de régulation d'écoulement (36) comprend en outre un retrait incurvé (68) formé dans la pluralité de dents (66), le retrait incurvé (68) ayant une surface en retrait (68) qui correspond généralement à un arc de déplacement d'un bord d'étanchéité externe (26) du disque de soupape (22) mais qui est formé de telle sorte que le bord d'étanchéité externe (26) du disque de soupape (22) se sépare de la surface en retrait (68) à mesure que le disque de soupape (22) se déplace vers la position ouverte.

7. Dispositif de régulation d'écoulement selon la revendication 6, **caractérisé en ce que**
chacun des canaux de régulation d'écoulement (62) comporte une paroi de limitation de l'écoulement (82) qui s'étend à l'écart d'une paroi externe dans le canal de régulation d'écoulement (62) depuis une surface côté amont (52) du dispositif de régulation d'écoulement (36) jusqu'à un pic (84) et qui s'étend vers la paroi externe depuis le pic (84) jusqu'à une surface côté aval (54) du dispositif de régulation d'écoulement (36).

8. Dispositif de régulation d'écoulement selon la revendication 6 ou 7, **caractérisé en ce que** chacun des canaux de régulation d'écoulement (62) a une largeur qui est inférieure à 4% d'un diamètre d'un tuyau d'afflux (38) associé et/ou
les canaux de régulation d'écoulement (62) sont configurés de manière à fournir un écoulement de même pourcentage de la soupape sur au moins 50% de la course du disque de soupape (22) depuis la position fermée jusqu'à la position ouverte.

9. Dispositif de régulation d'écoulement selon l'une quelconque des revendications 6 à 8,
**caractérisé en ce**
**qu'**il comprend en outre une bride de fixation (en 50) s'étendant depuis la paroi interne (58).

10. Dispositif de régulation d'écoulement selon la revendication 9, **caractérisé en ce que** la bride de fixation (en 50) a une largeur inférieure à la longueur de la paroi interne (58).
